# EUROPÄISCHE PATENTSCHRIFT

(11) **EP 2 613 684 B1**
(45) Veröffentlichungstag und Bekanntmachung des Hinweises auf die Patenterteilung: **03.04.2019**
(21) Anmeldenummer: 10750140.5
(22) Anmeldetag: 10.09.2010
(51) Int. Cl.: A47L 13/50, A47J 47/18

(54) **EIMERBEHÄLTER FÜR WASCHBÜRSTE**
RECEIVING DEVICE FOR A DISPENSING DEVICE FOR CLEANING LIQUID
DISPOSITIF RÉCEPTEUR POUR UN DISPOSITIF APPLICATEUR DE LIQUIDE DE LAVAGE

(43) Veröffentlichungstag der Anmeldung: 17.07.2013
(73) Patentinhaber: Alfred Kärcher SE & Co. KG, 71364 Winnenden (DE)
(72) Erfinder: KNISEL, Bernd, 71229 Leonberg (DE); ULRICHSKÖTTER, Heinz-Peter, 73630 Remshalden (DE); KNAPP, Gunthard, 76707 Hambrücken (DE)
(74) Vertreter: Hoeger, Stellrecht & Partner Patentanwälte mbB
(86) Internationale Anmeldenummer: PCT/EP2010/063285
(87) Internationale Veröffentlichungsnummer: WO 2012/031632

(56) Entgegenhaltungen:
- WO-A2-2006/098898
- US-A1- 2004 187 248
- US-S1- D 462 491

## Beschreibung

Die Erfindung betrifft eine Aufnahmevorrichtung nach dem Oberbegriff von Anspruch 1.

Eine Aufnahmevorrichtung kommt beispielsweise bei einem so genannten Selbstbedienungswaschplatz zum Einsatz, bei dem ein Benutzer sein Kraftfahrzeug selbst u.a. unter Einsatz der Abgabevorrichtung für Reinigungsflüssigkeit reinigen kann. Üblicherweise ist die Aufnahmevorrichtung dabei in Querrichtung des Waschplatzes an einem seitlichen Randbereich desselben und in Längsrichtung des Waschplatzes ungefähr in dessen Mitte platziert. Die Aufnahmevorrichtung dient zum Bevorraten der Abgabevorrichtung, beispielsweise nach dem Ende des Reinigungsvorganges oder bei einem Wechsel der Abgabevorrichtung. Beim Waschwerkzeug handelt es sich beispielsweise um eine am Ende des Stieles gehaltene Waschbürste, speziell von im Wesentlichen rechteckförmigem Querschnitt.

Es sind Aufnahmevorrichtungen in Form von zylindrischen Behältern bekannt. Dadurch ist es möglich, die Abgabevorrichtung derart in den Aufnahmeraum einzuführen, dass der Stiel in Querrichtung des Waschplatzes ausgerichtet ist. Ragt der Stiel aus dem Aufnahmeraum heraus, kann er vom Randbereich in den Waschplatz hinein ragen. Dies kann vom Benutzer als störend empfunden werden, wenn er den Waschplatz mit seinem Kraftfahrzeug befährt oder aus dem Waschplatz ausfährt. Außerdem kann der Benutzer daran gehindert werden, frei um sein Kraftfahrzeug herumzugehen, während er sein Kraftfahrzeug beispielsweise mit einer weiteren Abgabevorrichtung reinigt.

Aus der WO 97/07714 A1 ist eine kubische Aufnahmevorrichtung für Abgabevorrichtungen bekannt, die bei einem Selbstbedienungswaschplatz zum Einsatz kommen kann. Die kubische Aufnahmevorrichtung hat eine Deckenwand, in der mehrere Einführöffnungen für eine Mehrzahl von Abgabevorrichtungen gebildet sind.

Die WO 2006/098898 A2 beschreibt eine Aufnahmevorrichtung für Flüssigkeiten, die ausgestaltet ist als Eimer. Der Eimer weist einen Aufnahmeraum mit einem ovalen Querschnitt auf.

Ähnliche Eimer sind in der US 2004/0187248 A1 und in der US D462,491 S offenbart.

Aufgabe der vorliegenden Erfindung ist es, eine Aufnahmevorrichtung der eingangs genannten Art bereitzustellen, die, an einem Waschplatz verwendet, einem Benutzer eine benutzerfreundlichere Nutzung des Waschplatzes ermöglicht.

Diese Aufgabe wird durch eine Aufnahmevorrichtung mit den Merkmalen von Patentanspruch 1 gelöst.

Positions- und Richtungsangaben wie "obenseitig", "Unterseite" oder dergleichen sind vorliegend auf eine Grundstellung der Aufnahmevorrichtung bezogen aufzufassen, in der sie mit ihrer Unterseite auf einer Aufstellfläche stehend angeordnet ist. "Horizontal" bedeutet vorliegend "parallel zur Aufstellfläche" und "vertikal" bedeutet "senkrecht" zur Aufstellfläche. Als "lichtes Maß" wird die Weite des Aufnahmeraumes auch in dem Fall angesehen, wenn der Aufnahmeraum der Einführöffnung gegenüberliegend durch eine Wandung begrenzt ist und durch den Aufnahmeraum hindurch kein Licht scheinen kann.

Vorstehende Ausgestaltung der erfindungsgemäßen Aufnahmevorrichtung ermöglicht es, das lichte Maß des Aufnahmeraumes längs der ersten bzw. der zweiten Raumrichtung abhängig von einer bekannten Größe des Waschwerkzeuges so zu wählen, dass das Waschwerkzeug zwar längs der ersten Raumrichtung ausgerichtet in den Aufnahmeraum eingeführt werden kann, längs der zweiten Raumrichtung ausgerichtet aber nicht. Möglich wäre auch, die Abmessungen des Aufnahmeraumes so zu wählen, dass das Waschwerkzeug in einer schräg zur ersten und schräg zur zweiten Raumrichtung ausgerichteten Richtung noch in den Aufnahmeraum eingeführt werden kann. Beispielsweise weist eine Waschbürste einen im Wesentlichen rechteckförmigen Querschnitt auf mit einer größten Erstreckung quer zur Längsrichtung des Stieles. In diesem Fall wäre es möglich, das lichte Maß des Aufnahmeraumes längs der zweiten Raumrichtung so zu wählen, dass die Waschbürste nicht längs der zweiten Raumrichtung ausgerichtet in den Aufnahmeraum eingeführt werden kann, sondern allenfalls in einer schrägen Orientierung bezüglich der zweiten Raumrichtung. Die erfindungsgemäße Aufnahmevorrichtung mit einem, bezogen auf eine Horizontalebene, ovalen Querschnitt kann derart an einem Waschplatz positioniert werden, dass die zweite Raumrichtung in dessen Längsrichtung und die erste Raumrichtung in dessen Querrichtung verläuft. Führt der Benutzer die Waschbürste in Querrichtung des Waschplatzes, d.h. längs der ersten Raumrichtung, in den Aufnahmeraum ein, führt dies dazu, dass der Stiel in Längsrichtung des Waschplatzes ausgerichtet ist. Er ragt dann nicht in Querrichtung in den Waschplatz hinein. Ein Einführen der Waschbürste in den Aufnahmeraum derart, dass sie in Längsrichtung des Waschplatzes, d.h. längs der zweiten Raumrichtung, ausgerichtet ist, ist demgegenüber nicht möglich. Dadurch wird der Benutzer bei Verwendung einer erfindungsgemäßen Aufnahmevorrichtung an einem Waschplatz durch einen aus der Aufnahmevorrichtung herausragenden Stiel weniger behindert. Der Benutzer kann vom Stiel ungestört den Waschplatz befahren, aus diesem ausfahren und um sein Kraftfahrzeug herumgehen. Dies ermöglicht eine benutzerfreundlichere Nutzung des Waschplatzes.

Insbesondere ist die Einführöffnung längs der ersten Raumrichtung größer als längs der zweiten Raumrichtung.

Günstig ist es, dass der Rand mindestens einen quer zur zweiten Raumrichtung verlaufenden Vertiefungsabschnitt aufweist sowie mindestens einen quer zur ersten Raumrichtung verlaufenden Erhöhungsabschnitt, dessen Abstand zu einer Unterseite der Aufnahmevorrichtung größer ist als der Abstand des mindestens einen Vertiefungsabschnittes von der Unterseite. Am Vertiefungsabschnitt anliegend, kann der Stiel einen flacheren Winkel mit einer Aufstellfläche für die Aufnahmevorrichtung einschließen als am Erhöhungsabschnitt anliegend. Er nimmt somit eine niedrigere Position und damit einen stabileren Zustand ein, als wenn er am Erhöhungsabschnitt anliegt. Ist die Aufnahmevorrichtung, wie vorstehend erwähnt, so am Waschplatz angeordnet, dass die zweite Raumrichtung längs dessen Längsrichtung verläuft, nimmt der am Vertiefungsabschnitt anliegende Stiel eine Orientierung in Längsrichtung des Waschplatzes ein und kann dadurch eine geringere Behinderung für den Benutzer darstellen.

Der mindestens eine Erhöhungsabschnitt ist, bezogen auf die Unterseite der Aufnahmevorrichtung, konvex ausgebildet. Liegt der Stiel am Erhöhungsabschnitt an, stellt dies einen instabilen Zustand dar, und der Stiel kann den mindestens einen Erhöhungsabschnitt hinab gleiten, bis er zur Anlage an mindestens einen Vertiefungsabschnitt gelangt. Dadurch kann ein quer zu einer Horizontalebene ausgerichtetes Drehmoment auf den Stiel und damit auf die Abgabevorrichtung ausgeübt werden, d.h. der Rand stellt das nachfolgend erwähnte Führungselement dar.

In entsprechender Weise ist es von Vorteil, dass der mindestens eine Vertiefungsabschnitt, bezogen auf die Unterseite der Aufnahmevorrichtung, konkav ausgebildet ist. Dadurch kann ein den mindestens einen Vertiefungsabschnitt kontaktierender Stiel zum Beispiel dessen Rand entlang bis zum tiefsten Punkt des mindestens einen Vertiefungsabschnittes gleiten. Liegt der Stiel am tiefsten Punkt des mindestens einen Vertiefungsabschnittes an, nimmt er und damit die Abgabevorrichtung eine besonders stabile Position in der Aufnahmevorrichtung ein.

Der Rand weist zwei Vertiefungsabschnitte und/oder zwei Erhöhungsabschnitte auf, die jeweils auf einander gegenüberliegenden Seiten der Einführöffnung angeordnet sind. Dadurch kann der Stiel in zwei unterschiedlichen Orientierungen längs der zweiten Raumrichtung jeweils einen stabilen Zustand einnehmen. Dies erweist sich in der Praxis als vorteilhaft für die Handhabung der Abgabevorrichtung, weil sich der Stiel in der Regel in Richtung derjenigen Seite orientieren wird, von der aus der Benutzer die Abgabevorrichtung in die Aufnahmevorrichtung eingeführt hat. Dies erlaubt es dem Benutzer, die Abgabevorrichtung wieder auf einfache Weise von derselben Seite aus der Aufnahmevorrichtung zu entnehmen.

Sind die Erhöhungsabschnitte und die Vertiefungsabschnitte jeweils, wie vorstehend erwähnt, konvex bzw. konkav bezüglich der Unterseite gebildet, hat der Rand der zuletzt genannten Ausführungsform der Aufnahmevorrichtung insbesondere eine Kontur, welche einem Rand einer so genannten "Sattelfläche" entspricht.

Günstig ist es, wenn die Wandung eine Führungsfläche für das Waschwerkzeug ausbildet, mit der ein schräg zu einer Horizontalebene ausgerichtetes Drehmoment auf das Waschwerkzeug ausübbar ist. Beim Einführen in den Aufnahmeraum kann das Waschwerkzeug die Führungsfläche kontaktieren. Ist es mit der Richtung seiner größten Erstreckung anfänglich schräg zur zweiten Raumrichtung ausgerichtet, kann es unter Kontakt mit der Führungsfläche zum Beispiel so relativ zur Aufnahmevorrichtung gedreht werden, dass es sich mit dieser Richtung längs der ersten Raumrichtung einstellt. Diese Einstellung des Waschwerkzeugs relativ zur Aufnahmevorrichtung erfolgt gewissermaßen "automatisch", wenn die Abgabevorrichtung unter Schwerkrafteinfluss in den Aufnahmeraum eingeführt wird.

Vorzugsweise ist der Aufnahmeraum sich ausgehend vom Rand in Richtung einer Unterseite der Aufnahmevorrichtung verjüngend ausgebildet, um einem Benutzer das Einführen der Abgabevorrichtung in den Aufnahmeraum zu erleichtern. Der Aufnahmeraum kann beispielsweise nahe dem Rand so bemessen sein, dass das Waschwerkzeug auch in einer schräg zur zweiten Raumrichtung ausgerichteten Richtung noch in den Aufnahmeraum eingeführt werden kann, wohingegen das Waschwerkzeug an einer Unterseite der Aufnahmevorrichtung allein eine längs der ersten Raumrichtung ausgerichtete Stellung einnehmen kann. In letztere Stellung kann das Waschwerkzeug zum Beispiel durch Kontakt mit der Führungsfläche überführt werden.

Von Vorteil ist es, wenn der Aufnahmeraum sich längs der zweiten Raumrichtung in größerem Ausmaß verjüngend ausgebildet ist als längs der ersten Raumrichtung. Dadurch kann auf konstruktiv einfache Weise die vorstehend erwähnte Führungsfläche gebildet werden.

Es ist insbesondere möglich, dass der Aufnahmeraum längs der ersten Raumrichtung verjüngungsfrei oder im Wesentlichen verjüngungsfrei ist und eine alleinige Verjüngung des Aufnahmeraumes längs der zweiten Raumrichtung erfolgt.

Vorzugsweise ist der Aufnahmeraum sich in Richtung auf eine Fluchtlinie verjüngend ausgebildet. Der Aufnahmeraum verjüngt sich bei dieser Ausführungsform der Aufnahmevorrichtung nicht konisch, d.h. nicht in Richtung eines einzigen Fluchtpunktes, sondern in Richtung einer Fluchtlinie. Die Fluchtlinie ist beispielsweise in einer vertikalen Ebene angeordnet, senkrecht zu der die zweite Raumrichtung ausgerichtet ist. Eine Verjüngung in Richtung auf eine Fluchtlinie kann dadurch erzielt werden, dass sich der Aufnahmeraum längs der zweiten Raumrichtung stärker verjüngt als längs der ersten Raumrichtung, wobei die Wandung die Führungsfläche ausbilden kann.

Vorzugsweise ist die Wandung glatt ausgebildet, d.h. kantenfrei und insbesondere eckenfrei. Dadurch kann die Abgabevorrichtung an der Wandung nicht verkanten. Dies erleichtert einem Benutzer das Einführen der Abgabevorrichtung in den Aufnahmeraum.

Insbesondere erweist es sich in der Praxis als günstig, wenn der Aufnahmeraum einen elliptischen oder im Wesentlichen elliptischen Querschnitt mit einer längs der ersten Raumrichtung verlaufenden Hauptachse und einer längs der zweiten Raumrichtung verlaufenden Nebenachse der dem Querschnitt zugrunde liegenden Ellipse aufweist. Bei einer derartigen Querschnittsform des Aufnahmeraumes kann die vorstehend erwähnte Verjüngung in Richtung einer Fluchtlinie zum Beispiel dadurch erzielt werden, dass die Exzentrizität der Ellipse in Richtung auf die Unterseite der Aufnahmevorrichtung zunimmt.

Von Vorteil ist es, wenn der Rand ein Führungselement für den Stiel der Abgabevorrichtung ausbildet, mit dem ein schräg zu einer Horizontalebene ausgerichtetes Drehmoment auf den Stiel ausübbar ist. Beim Einführen der Abgabevorrichtung in den Aufnahmeraum kann der Rand den Stiel kontaktieren. Dies erlaubt es, auf den Stiel und damit auf die Abgabevorrichtung ein Drehmoment auszuüben, so dass dieser sich beispielsweise längs der zweiten Raumrichtung einstellen kann.

Es kann vorgesehen sein, dass der Rand in Richtung des Aufnahmeraumes mit mindestens einer Fase abgefast ausgebildet ist, so dass der Stiel an der mindestens einen Fase flächig anliegen kann.

Um eine konstruktiv einfache Ausgestaltung zu erzielen, ist es günstig, wenn die Abgabevorrichtung symmetrisch ausgestaltet ist. Insbesondere ist die Aufnahmevorrichtung symmetrisch bezüglich einer vertikalen Symmetrieebene ausgestaltet, senkrecht zu der die zweite Raumrichtung ausgerichtet ist.

Von Vorteil ist es, wenn die Aufnahmevorrichtung eine den Aufnahmeraum untenseitig begrenzende Bodenwand umfasst, in der eine Austrittsöffnung für Reinigungsflüssigkeit gebildet ist. Durch die Austrittsöffnung hindurch kann die Reinigungsflüssigkeit, insbesondere Wasser, austreten, so dass das Waschwerkzeug nicht dauerhaft im Wasser angeordnet ist. Dies ist beispielsweise bei Abgabevorrichtungen günstig, mit denen ein so genannter "Trockenschaum" mit sehr niedrigem Wassergehalt abgegeben werden soll.

Bei einer andersartigen Ausführungsform der erfindungsgemäßen Aufnahmevorrichtung ist es von Vorteil, wenn die Aufnahmevorrichtung einen Ablaufkanal für Reinigungsflüssigkeit umfasst mit einer in der Wandung gebildeten Eintrittsöffnung, die im Abstand zu einer den Aufnahmeraum untenseitig dichtend begrenzenden Bodenwand angeordnet ist und mit einer Austrittsöffnung ins Freie, die unterhalb der Eintrittsöffnung angeordnet ist. Eine derartige Ausgestaltung der Aufnahmevorrichtung ist beispielsweise günstig für eine Abgabevorrichtung, mit der ein so genannter "Nassschaum" abgegeben werden soll. Das Waschwerkzeug, aufgenommen im Aufnahmeraum, kann dabei in der Reinigungsflüssigkeit, insbesondere Wasser, eingetaucht sein. Durch den Ablaufkanal wird sichergestellt, dass die Reinigungsflüssigkeit einen maximalen Pegel im Aufnahmeraum nicht überschreitet.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine perspektivische Ansicht einer erfindungsgemäßen Aufnahmevorrichtung;
- Figur 2:: eine Seitenansicht der Aufnahmevorrichtung aus Figur 1;
- Figur 3:: eine Draufsicht auf die Aufnahmevorrichtung aus Figur 1;
- Figur 4:: eine Schnittansicht längs der Linie 4-4 in Figur 3;
- Figur 5:: eine Schnittansicht längs der Linie 5-5 in Figur 3 und
- Figuren 6A bis 6C:: eine Abfolge von drei perspektivischen Darstellungen der Aufnahmevorrichtung aus Figur 1, in die eine Abgabevorrichtung für Reinigungsflüssigkeit eingeführt wird, in Figur 6C zusätzlich schematisch die Platzierung der Aufnahmevorrichtung an einem Rand eines Waschplatzes für Kraftfahrzeuge.

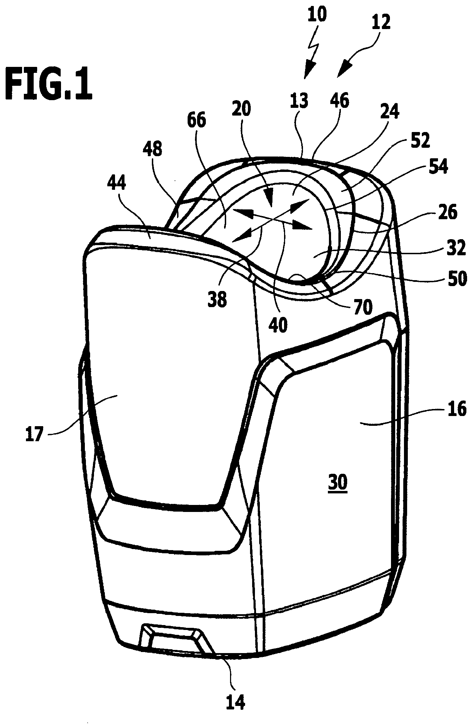

Figur 1 zeigt in perspektivischer Darstellung eine bevorzugte Ausführungsform einer erfindungsgemäßen Aufnahmevorrichtung 10, nachfolgend als Behälter 12 bezeichnet. Der Behälter 12 weist eine Oberseite 13, eine Unterseite 14, eine linke Seite 15, eine rechte Seite 16, eine Vorderseite 17 sowie eine Rückseite 18 auf, jeweils bezogen auf eine Gebrauchsstellung, in der der Behälter 12 mit der Unterseite 14 auf einer Aufstellfläche aufrecht stehend angeordnet ist.

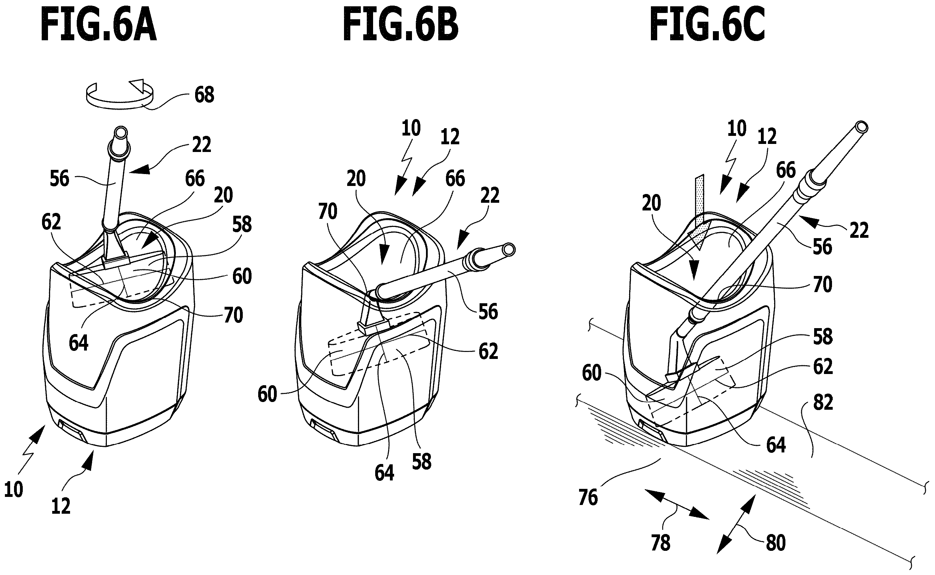

Der Behälter 12 bildet einen Aufnahmeraum 20 für eine in den Figuren 6A bis 6C dargestellte Abgabevorrichtung 22 für Reinigungsflüssigkeit, insbesondere Wasser, welche Abgabevorrichtung 22 über eine Einführöffnung 24 an der Oberseite 13 teilweise in den Aufnahmeraum 20 eingeführt werden kann. Darauf wird später noch näher eingegangen.

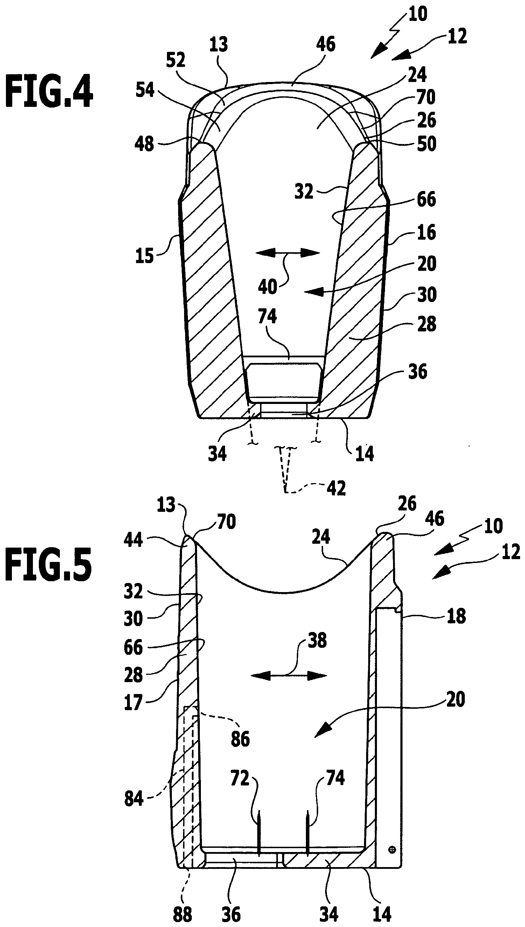

Die Einführöffnung 24 wird von einem in sich geschlossenen Rand 26 eingefasst, der an der Oberseite 13 von einer den Aufnahmeraum 20 seitlich begrenzenden Wandung 28 des Behälters 12 gebildet ist. Die Wandung 28 ist vorliegend massiv und bildet daher sowohl eine Außenwand 30 des Behälters 12 als auch eine den Aufnahmeraum 20 seitlich begrenzende Innenwand 32 (Figuren 4 und 5). Denkbar ist jedoch auch, dass die Wandung 28 doppelwandig gebildet ist, wobei die Außenwand 30 und die Innenwand 32 voneinander durch einen in der Wandung 28 gebildeten Hohlraum getrennt sind (nicht gezeigt).

An der Unterseite 14 wird der Aufnahmeraum 20 durch eine Bodenwand 34 des Behälters 12 begrenzt, in dem eine Austrittsöffnung 36 für Reinigungsflüssigkeit gebildet ist.

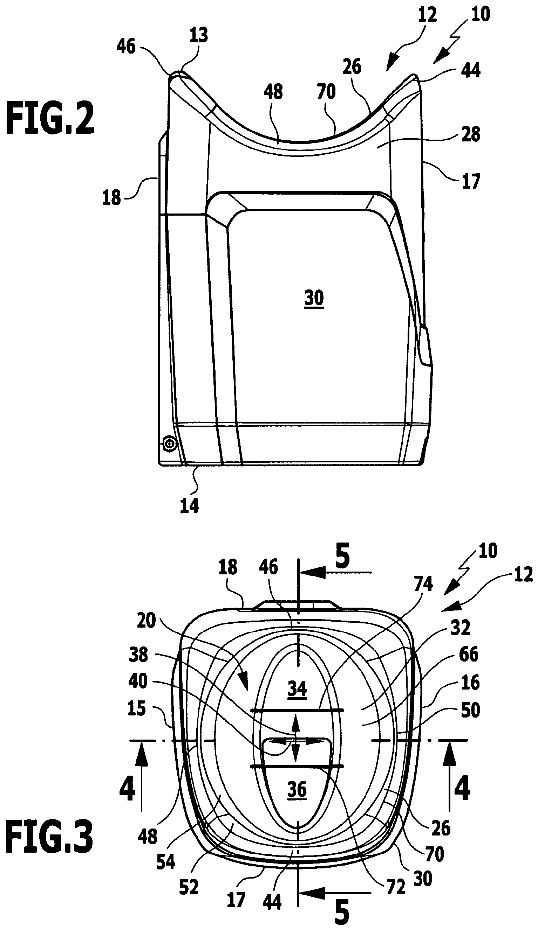

Eine gedachte horizontale Verbindungslinie der Vorderseite 17 mit der Rückseite 18, die durch die Mitte des Aufnahmeraums 20 verläuft, definiert eine erste Raumrichtung, nachfolgend erste Behälterrichtung 38, des Behälters 12. In entsprechender Weise definiert eine gedachte horizontale Verbindungslinie der linken Seite 15 und der rechten Seite 16 miteinander, die durch die Mitte des Aufnahmeraums 20 verläuft und senkrecht zur ersten Behälterrichtung 38 ausgerichtet ist, eine zweite Raumrichtung, nachfolgend zweite Behälterrichtung 40, des Behälters 12 (Figuren 3 bis 5). Bezüglich einer vertikalen und längs der ersten Behälterrichtung 38 verlaufenden Symmetrieebene ist der Behälter 12 symmetrisch ausgestaltet.

Der Aufnahmeraum 20 ist schachtförmig gebildet und weist einen ovalen und insbesondere elliptischen Querschnitt auf, bezogen auf eine horizontale Schnittebene. Der elliptische Querschnitt des Aufnahmeraumes 20 ergibt sich durch die Kontur der Innenwand 32. Die der elliptischen Querschnittsform des Aufnahmeraums 20 zugrunde liegende Ellipse weist dabei je nach Abstand von der Unterseite 14 eine unterschiedliche Exzentrizität auf. Während nahe dem Rand 26 die Ellipse eine vergleichsweise geringe Exzentrizität aufweist, steigt ihre Exzentrizität in Richtung der Bodenwand 34 stark an. Dies ist am besten in Figur 3 zu erkennen. Hierbei ist die Hauptachse der jeweiligen Ellipse in der ersten Behälterrichtung 38 ausgerichtet und die Nebenachse der Ellipse in der zweiten Behälterrichtung 40.

Das lichte Maß des Aufnahmeraumes 20 längs der ersten Behälterrichtung 38 ist infolgedessen größer als das lichte Maß des Aufnahmeraumes 20 längs der zweiten Behälterrichtung 40. Als "lichtes Maß" wird beim Behälter 12 mit der ovalen und insbesondere elliptischen Querschnittsform des Aufnahmeraums 20 die Länge der Hauptachse längs der ersten Behälterrichtung 38 bzw. die Länge der Nebenachse längs der zweiten Behälterrichtung 40 in einer horizontalen Schnittebene angesehen. Weil die Exzentrizität der jeweiligen Ellipse des Aufnahmeraums 20 ausgehend vom Rand 26 in Richtung der Bodenwand 34 stetig zunimmt, ist das lichte Maß des Aufnahmeraums 20 längs der ersten Behälterrichtung 38 in jeder der horizontalen Schnittebenen größer als das lichte Maß längs der zweiten Behälterrichtung 40.

Außerdem führt das Anwachsen der Exzentrizität der elliptischen Querschnittsform des Aufnahmeraumes 20 zu dessen Verjüngung ausgehend vom Rand 26 in Richtung der Bodenwand 34, und zwar derart, dass sich der Aufnahmeraum längs der zweiten Behälterrichtung 40 stärker verjüngt als längs der ersten Behälterrichtung 38 (Figuren 4 und 5). Insbesondere ist der Aufnahmeraum längs der ersten Behälterrichtung 38 nahezu verjüngungsfrei, so dass die Innenwand 32 gewissermaßen an den Hauptscheiteln der der Querschnittsform des Aufnahmeraumes 20 zugrunde liegenden Ellipse nahezu vertikal verläuft (Figur 5). Im Ergebnis verjüngt sich der Aufnahmeraum 20 in Richtung einer Fluchtlinie 42, die in der vorstehend erwähnten Symmetrieebene des Behälters 12 verläuft (in Figur 4 senkrecht zur Zeichenebene).

Der Rand 26 verläuft nicht in einer Ebene, sondern er ist wellenförmig ausgebildet und umfasst zwei Erhöhungsabschnitte 44 und 46 sowie zwei Vertiefungsabschnitte 48 und 50. Die Erhöhungsabschnitte 44 und 46 sind an der Vorderseite 17 bzw. der Rückseite 18 angeordnet, so dass sie einander bezüglich des Aufnahmeraums 20 diametral gegenüberliegen. Sie verlaufen jeweils quer zur ersten Behälterrichtung 38. In entsprechender Weise sind die Vertiefungsabschnitte 48 und 50 an der linken Seite 15 bzw. der rechten Seite 16 angeordnet, so dass sie einander bezüglich des Aufnahmeraums 20 diametral gegenüberliegen. Sie verlaufen jeweils quer zur zweiten Behälterrichtung 40.

Der Rand 26 ist insgesamt kontinuierlich glatt, d.h. kantenfrei gebildet, wobei der Erhöhungsabschnitt 44 in die Vertiefungsabschnitte 48 und 50 ebenso spaltlos übergeht wie der Erhöhungsabschnitt 46 in die Vertiefungsabschnitte 48 und 50.

Die Erhöhungsabschnitte 44 und 46 sind bezüglich der Unterseite 14 konvex ausgebildet, und die Vertiefungsabschnitte 48 und 50 sind bezüglich der Unterseite 14 konkav ausgebildet, so dass der Rand 26 an den Erhöhungsabschnitten 44 und 46 einen größeren Abstand von der Unterseite 14 aufweist als an den Vertiefungsabschnitten 48 und 50. Durch diese Ausgestaltung bildet der Rand 26 ungefähr den Rand einer so genannten "Sattelfläche" mit einer bezüglich der Unterseite 14 konkaven Form längs der ersten Behälterrichtung 38 sowie konvexen Form längs der zweiten Behälterrichtung 40.

In den Aufnahmeraum 20 hinein ist der Rand 26 beim Übergang in die Innenwand 32 zweifach abgefast, und zwar mittels zweier umlaufender Fasen 52 und 54. Im Anschluss an die Fase 54 verläuft der Aufnahmeraum 20, wie erwähnt, schachtförmig in Richtung der Bodenwand 34.

Nachfolgend werden unter Verweis auf die Figuren 6A bis 6C Vorteile der vorstehend erwähnten Ausgestaltung des Behälters 12 erläutert. In den Figuren 6A bis 6C ist die bereits vorstehend erwähnte Abgabevorrichtung 22 dargestellt. Die Abgabevorrichtung 22 umfasst einen von einer Bedienperson handhabbaren Stiel 56, an dessen Ende ein Waschwerkzeug 58 gehalten ist. Das Waschwerkzeug 58 ist eine Waschbürste 60 von im Wesentlichen rechteckförmiger Querschnittsform mit einer Längsrichtung 62 und einer Querrichtung 64. Die Längsrichtung 62 verläuft quer zur Längsrichtung des Stiels 56. An dem der Waschbürste 60 gegenüberliegenden Ende ist ein Zuführschlauch für Reinigungsflüssigkeit an den Stiel 56 angeschlossen (nicht gezeigt).

Der Behälter 12 ist in seinen Abmessungen an die Größe der Waschbürste 60 angepasst. Insbesondere ist das lichte Maß des Aufnahmeraumes 20 derart bemessen, dass die Waschbürste 60 mit ihrer Längsrichtung 62 längs der ersten Behälterrichtung 38 noch bis zur Bodenwand 34 in den Aufnahmeraum 20 eingeführt werden kann. Dementsprechend kann die Waschbürste 60 durch die Einführöffnung 24 derart eingeführt werden, dass ihre Längsrichtung 62 längs der ersten Behälterrichtung 38 ausgerichtet ist. Es ist auch möglich, die Waschbürste 60 selbst dann noch durch die Einführöffnung 24 in den Aufnahmeraum 20 einzuführen, wenn ihre Längsrichtung 62 schräg bezüglich der ersten Behälterrichtung 38 und der zweiten Behälterrichtung 40 ausgerichtet ist (Figur 6A). Indessen ist es nicht möglich, die Waschbürste 60 mit ihrer Längsrichtung 62 längs der zweiten Behälterrichtung 40 ausgerichtet durch die Einführöffnung 24 in den Aufnahmeraum 20 einzuführen.

Wird die Waschbürste 60 mit ihrer Längsrichtung 62 schräg zur ersten Behälterrichtung 38 und zur zweiten Behälterrichtung 40 in den Aufnahmeraum 20 eingeführt, kontaktiert sie die Innenwand 32. Aufgrund der vorstehend erläuterten, sich nach unten in Richtung der Fluchtlinie 42 verjüngenden Form des Aufnahmeraumes 20 mit elliptischem Querschnitt bildet die Innenwand 32 eine Führungsfläche 66 für die sie kontaktierende Waschbürste 60. Die Führungsfläche 66 bewirkt, dass auf die Waschbürste 60 ein schräg, insbesondere quer zu einer Horizontalebene ausgerichtetes Drehmoment ausgeübt wird, welches bei dem in der Figur 6A dargestellten Beispiel nach oben weist. Dies bewirkt eine Rotation der Waschbürste 60 derart, dass sich die Längsrichtung 62 längs der ersten Behälterrichtung 38 einstellt, symbolisiert in Figur 6A durch einen Pfeil 68. Diese Ausrichtung der Waschbürste 60 relativ zum Behälter 12 erfolgt gewissermaßen "automatisch" infolge der Form der Innenwand 32 und dadurch, dass die Abgabevorrichtung 22 unter Schwerkrafteinfluss in den Behälter 12 eingeführt wird. Ferner kann die Ausrichtung unabhängig davon erzielt werden, welchen Winkel die Längsrichtung 62 anfänglich relativ zur ersten Behälterrichtung 38 und zur zweiten Behälterrichtung 40 einnimmt, sofern die Waschbürste 60 einmal durch die Einführöffnung 24 hindurch in den Aufnahmeraum 20 eingeführt worden ist.

Die Waschbürste 60 kann so weit in den Aufnahmeraum 20 eintauchen, bis sie an zwei plattenförmigen Stützelementen 72 und 74, die von der Bodenwand 34 nach oben abstehen, anliegt. Dies hat den Zweck, dass in der Zeichnung nicht dargestellte Borsten der Waschbürste 60 nicht dadurch umgebogen und beschädigt werden, dass die Waschbürste 60 unmittelbar an der Bodenwand 34 anliegt.

Wird die Waschbürste 60 der Bodenwand 34 angenähert, kontaktiert der Stiel 56 den Rand 26. Der Rand 26 bildet aufgrund seiner wellenförmigen Form ein Führungselement 70 für den Stiel 56 aus. Kontaktiert der Stiel 56 einen der Erhöhungsabschnitte 44 oder 46, gleitet er an diesen entlang in einen der Vertiefungsabschnitte 48 oder 50. Dies erfolgt aufgrund der konvexen Kontur der Erhöhungsabschnitte 44 und 46 und der konkaven Kontur der Vertiefungsabschnitte 48 und 50. Der Stiel 56 gleitet so lang unter Rotation in Pfeilrichtung 68 den Rand 26 entlang, bis er an einem der Vertiefungsabschnitte 48 oder 50 den jeweils tiefsten Punkt kontaktiert und dadurch eine bezüglich des Behälters 12 besonders stabile Position einnimmt, wobei er an einer der Fasen 52 oder 54 flächig anliegt.

Liegt der Stiel 56 an dem jeweils tiefsten Punkt des Vertiefungsabschnittes 48 oder 50 an, ist er in einer vertikalen, längs der zweiten Behälterrichtung 40 verlaufenden Ebene angeordnet (Figur 6C).

Der Behälter 12 kann beispielsweise bei einem Waschplatz für Kraftfahrzeuge zum Einsatz kommen, der in Figur 6C schematisch abschnittsweise dargestellt und mit dem Bezugszeichen 76 belegt ist. Der Waschplatz 76 weist eine Längsrichtung 78 und eine Querrichtung 80 auf, wobei in der Praxis ein Benutzer sein zu reinigendes Kraftfahrzeug auf dem Waschplatz 76 in Längsrichtung 78 positioniert.

Der Behälter 12 ist an einem Randbereich 82 des Waschplatzes 76 platziert, und zwar derart, dass die erste Behälterrichtung 38 in Querrichtung 80 verläuft und die zweite Behälterrichtung 40 in Längsrichtung 78. Diese Ausrichtung des Behälters 12 relativ zum Waschplatz 76 hat den Vorteil, dass beim Einführen der Abgabevorrichtung 22 in den Behälter 12, wie vorstehend erwähnt, der Stiel 56 sich längs der zweiten Behälterrichtung 40 automatisch einstellt und in Längsrichtung 78 des Waschplatzes 76 ausgerichtet ist. Insbesondere kann der Stiel 56 nicht in Querrichtung 80 des Waschplatzes 76 ausgerichtet werden. Dies liegt zum einen daran, dass die Waschbürste 60 nicht mit ihrer Längsrichtung 62 längs der zweiten Behälterrichtung 40 ausgerichtet in den Aufnahmeraum 20 eingeführt werden kann, und zum weiteren daran, dass die Abgabevorrichtung 22 aufgrund der Führungsfläche 66 und des Führungselementes 70 in Pfeilrichtung 68 rotiert wird, bis der Stiel 56 sich in Längsrichtung 78 einstellt.

Die Einstellung des Stiels 56 in Längsrichtung 78 hat den Vorteil, dass der Stiel 56 nicht vom Randbereich 82 in den das Kraftfahrzeug des Benutzers aufnehmenden Abschnitt des Waschplatzes 76 hinein ragt. Dadurch kann der Stiel 56 den Benutzer beim Befahren des Waschplatzes 76 und beim Ausfahren aus demselben nicht behindern. Ferner ist der Weg um das Kraftfahrzeug des Benutzers herum freigehalten und wird nicht durch den Stiel 56 blockiert.

Der Behälter 12 ist zur Verwendung mit einer Abgabevorrichtung 22 vorgesehen, mit der so genannter "Trockenschaum" abgegeben werden soll. Trockenschaum enthält nur einen sehr geringen Gehalt an Reinigungsflüssigkeit, insbesondere Wasser. Zu diesem Zweck ist die Austrittsöffnung 36 vorgesehen, aus der die Reinigungsflüssigkeit aus dem Behälter 12 austreten kann. Dadurch ist die Waschbürste 60 weitgehend frei von Reinigungsflüssigkeit im Aufnahmeraum 20 angeordnet.

Bei einer Variante des Behälters 12 ist die Bodenwand 34 geschlossen und weist keine Austrittsöffnung 36 auf. Stattdessen weist eine derartige Variante einen in Figur 5 schematisch durch gestrichelte Linie dargestellten Ablaufkanal 84 auf. Der Ablaufkanal 84 mündet über eine Eintrittsöffnung 86 in der Innenwand 32 in den Aufnahmeraum 20. An der Unterseite 14 mündet der Ablaufkanal 84 über eine Austrittsöffnung 88 ins Freie. Der Ablaufkanal 84 ist ein Überlaufkanal für Reinigungsflüssigkeit. Wenn bei der Variante des Behälters 12 eine Abgabevorrichtung 22 zum Einsatz kommt, die zum Abgeben von so genanntem "Nassschaum" vorgesehen ist, ist es erwünscht, dass die Waschbürste 60 im Aufnahmeraum 20 dauerhaft in die Reinigungsflüssigkeit eintaucht. Der Ablaufkanal 84 stellt sicher, dass der Pegel an Reinigungsflüssigkeit im Aufnahmeraum 20 ein Maximum nicht überschreitet.

## Patentansprüche

1. Aufnahmevorrichtung (10) für eine Abgabevorrichtung (22) für Reinigungsflüssigkeit, welche Abgabevorrichtung (22) einen Stiel (56) sowie ein an dessen Ende gehaltenes Waschwerkzeug (58) aufweist, wobei die Aufnahmevorrichtung (10) einen von einer Wandung (28) seitlich begrenzten Aufnahmeraum (20) für zumindest einen Teil der Abgabevorrichtung (22) aufweist, und wobei die Wandung (28) obenseitig einen eine Einführöffnung (24) einfassenden Rand (26) ausbildet, durch welche Einführöffnung (24) hindurch die Abgabevorrichtung (22) in den Aufnahmeraum (20) einführbar ist, wobei der Aufnahmeraum (20) mindestens bereichsweise einen, bezogen auf eine Horizontalebene, ovalen Querschnitt aufweist, wobei das lichte Maß des Aufnahmeraumes (20) längs einer horizontalen ersten Raumrichtung (38) größer ist als das lichte Maß des Aufnahmeraumes (20) längs einer horizontalen, quer zur ersten Raumrichtung (38) ausgerichteten zweiten Raumrichtung (40) und wobei die Einführöffnung (24) längs der ersten Raumrichtung (38) größer ist als längs der zweiten Raumrichtung (40), **dadurch gekennzeichnet, dass** der Rand (26) mindestens einen quer zur zweiten Raumrichtung (40) verlaufenden Vertiefungsabschnitt (48, 50) aufweist sowie mindestens einen quer zur ersten Raumrichtung (38) verlaufenden Erhöhungsabschnitt (44, 46), dessen Abstand zu einer Unterseite (14) der Aufnahmevorrichtung (10) größer ist als der Abstand des mindestens einen Vertiefungsabschnittes (48, 50) von der Unterseite (14), wobei der mindestens eine Erhöhungsabschnitt (44, 46), bezogen auf die Unterseite (14) der Aufnahmevorrichtung (10), konvex ausgebildet ist und wobei der mindestens eine Vertiefungsabschnitt (48, 50), bezogen auf die Unterseite (14) der Aufnahmevorrichtung (10), konkav ausgebildet ist, und dass der Rand (26) zwei Vertiefungsabschnitte (48, 50) und/oder zwei Erhöhungsabschnitte (44, 46) aufweist, die jeweils auf einander gegenüberliegenden Seiten der Einführöffnung (24) angeordnet sind.

2. Aufnahmevorrichtung nach Anspruch 1, **dadurch gekennzeichnet, dass** die Wandung (28) eine Führungsfläche (66) für das Waschwerkzeug (58) ausbildet, mit der ein schräg zu einer Horizontalebene ausgerichtetes Drehmoment auf das Waschwerkzeug (58) ausübbar ist.

3. Aufnahmevorrichtung nach einem der voranstehenden Ansprüche, **dadurch gekennzeichnet, dass** der Aufnahmeraum (20) sich ausgehend vom Rand (26) in Richtung einer Unterseite (14) der Aufnahmevorrichtung verjüngend ausgebildet ist.

4. Aufnahmevorrichtung nach Anspruch 3, **dadurch gekennzeichnet, dass** der Aufnahmeraum (20) sich längs der zweiten Raumrichtung (40) in größerem Ausmaß verjüngend ausgebildet ist als längs der ersten Raumrichtung (38).

5. Aufnahmevorrichtung nach Anspruch 3 oder 4, **dadurch gekennzeichnet, dass** der Aufnahmeraum (20) sich in Richtung auf eine Fluchtlinie (42) verjüngend ausgebildet ist.

6. Aufnahmevorrichtung nach einem der Ansprüche 2 bis 5, **dadurch gekennzeichnet, dass** die Wandung (28) glatt ausgebildet ist.

7. Aufnahmevorrichtung nach einem der voranstehenden Ansprüche, **dadurch gekennzeichnet, dass** der Aufnahmeraum (20) einen elliptischen oder im Wesentlichen elliptischen Querschnitt mit einer längs der ersten Raumrichtung (38) verlaufenden Hauptachse und einer längs der zweiten Raumrichtung (40) verlaufenden Nebenachse der dem Querschnitt zugrunde liegenden Ellipse aufweist.

8. Aufnahmevorrichtung nach einem der voranstehenden Ansprüche, **dadurch gekennzeichnet, dass** der Rand (26) ein Führungselement (70) für den Stiel (56) der Abgabevorrichtung (22) ausbildet, mit dem ein schräg zu einer Horizontalebene ausgerichtetes Drehmoment auf den Stiel (56) ausübbar ist.

9. Aufnahmevorrichtung nach einem der voranstehenden Ansprüche, **dadurch gekennzeichnet, dass** der Rand (26) in Richtung des Aufnahmeraumes (20) mit mindestens einer Fase (52, 54) abgefast ausgebildet ist.

10. Aufnahmevorrichtung nach einem der voranstehenden Ansprüche, **dadurch gekennzeichnet, dass** die Aufnahmevorrichtung (10) symmetrisch bezüglich einer vertikalen Symmetrieebene ausgestaltet ist, senkrecht zu der die zweite Raumrichtung (40) ausgerichtet ist.

11. Aufnahmevorrichtung nach einem der voranstehenden Ansprüche, **dadurch gekennzeichnet, dass** die Aufnahmevorrichtung (10) eine den Aufnahmeraum (20) untenseitig begrenzende Bodenwand (34) umfasst, in der eine Austrittsöffnung (36) für Reinigungsflüssigkeit gebildet ist.

12. Aufnahmevorrichtung nach einem der Ansprüche 1 bis 10, **dadurch gekennzeichnet, dass** die Aufnahmevorrichtung (10) einen Ablaufkanal (84) für Reinigungsflüssigkeit umfasst mit einer in der Wandung (28) gebildeten Eintrittsöffnung (86), die im Abstand zu einer den Aufnahmeraum (20) untenseitig dichtend begrenzenden Bodenwand (34) angeordnet ist und mit einer Austrittsöffnung (88) ins Freie, die unterhalb der Eintrittsöffnung (86) angeordnet ist.

## Claims

1. Receptacle device (10) for a delivery device (22) for cleaning liquid, which delivery device (22) has a stick (56) as well as a washing tool (58) held on the end thereof, wherein the receptacle device (10) has a receiving space (20), which is laterally delimited by a wall arrangement (28), for at least a part of the delivery device (22), and wherein the wall arrangement (28) forms at the top a rim (26) enclosing an insertion opening (24), through which insertion opening (24) the delivery device (22) is insertible into the receiving space (20), wherein the receiving space (20) has at least in regions an oval cross section in relation to a horizontal plane, wherein the clear measure of the receiving space (20) along a horizontal first spatial direction (38) is greater than the clear measure of the receiving space (20) along a horizontal second spatial direction (40) aligned transverse to the first spatial direction (38), and wherein the insertion opening (24) along the first spatial direction (38) is larger than along the second spatial direction (40), **characterized in that** the rim (26) has at least one recess section (48, 50) running transverse to the second spatial direction (40) as well as at least one raised section (44, 46) running transverse to the first spatial direction (38), the distance of which raised section (44, 46) from an underside (14) of the receptacle device (10) is greater than the distance of the at least one recess section (48, 50) from the underside (14), wherein the at least one raised section (44, 46), in relation to the underside (14) of the receptacle device (10), is of convex configuration, and wherein the at least one recess section (48, 50), in relation to the underside (14) of the receptacle device (10), is of concave configuration, and **in that** the rim (26) has two recess sections (48, 50) and/or two raised sections (44, 46) which are each arranged on opposing sides of the insertion opening (24).

2. Receptacle device in accordance with Claim 1, **characterized in that** the wall arrangement (28) forms a guidance face (66) for the washing tool (58), with which guidance face (66) a torque aligned oblique to a horizontal plane is exertable on the washing tool (58).

3. Receptacle device in accordance with any one of the preceding Claims, **characterized in that** the receiving space (20) is configured tapering commencing from the rim (26) in the direction of an underside (14) of the receptacle device.

4. Receptacle device in accordance with Claim 3, **characterized in that** the receiving space (20) is configured tapering to a greater extent along the second spatial direction (40) than along the first spatial direction (38).

5. Receptacle device in accordance with Claim 3 or 4, **characterized in that** the receiving space (20) is configured tapering in the direction toward a vanishing line (42).

6. Receptacle device in accordance with any one of Claims 2 to 5, **characterized in that** the wall arrangement (28) is formed smooth.

7. Receptacle device in accordance with any one of the preceding Claims, **characterized in that** the receiving space (20) has an elliptical or substantially elliptical cross section with a main axis, running along the first spatial direction (38), and a secondary axis, running along the second spatial direction (40), of the ellipse underlying the cross section.

8. Receptacle device in accordance with any one of the preceding Claims, **characterized in that** the rim (26) forms a guidance element (70) for the stick (56) of the delivery device (22), with which guidance element (70) a torque aligned oblique to a horizontal plane is exertable on the handle (56).

9. Receptacle device in accordance with any one of the preceding Claims, **characterized in that** the rim (26) is configured chamfered with at least one chamfer (52, 54) in the direction of the receiving space (20).

10. Receptacle device in accordance with any one of the preceding Claims, **characterized in that** the receptacle device (10) is of symmetrical design in relation to a vertical symmetry plane, perpendicular to which the second spatial direction (40) is aligned.

11. Receptacle device in accordance with any one of the preceding Claims, **characterized in that** the receptacle device (10) comprises a base wall (34) delimiting the receiving space (20) at the bottom, in which base wall (34) an outlet opening (36) for cleaning liquid is formed.

12. Receptacle device in accordance with any one of Claims 1 to 10, **characterized in that** the receptacle device (10) comprises a drainage channel (84) for cleaning liquid with an inlet opening (86) formed in the wall arrangement (28), which inlet opening (86) is arranged at a distance from a base wall (34) sealingly delimiting the receiving space (20) at the bottom and with an outlet opening (88) into the open which is arranged below the inlet opening (86).

## Revendications

1. Dispositif de réception (10) pour un dispositif applicateur (22) de liquide de nettoyage, lequel dispositif applicateur (22) présente une tige (56) ainsi qu'un outil de lavage (58) maintenu à l'extrémité de celle-ci, dans lequel le dispositif de réception (10) comprend un compartiment de réception (20) délimité latéralement par une paroi (28) pour au moins une partie du dispositif applicateur (22), et dans lequel la paroi (28) forme sur le haut un bord (26) entourant une ouverture d'introduction (24), par laquelle ouverture d'introduction (24) le dispositif applicateur (22) peut être introduit dans le compartiment de réception (20), dans lequel le compartiment de réception (20) présente au moins en partie une section ovale par rapport à un plan horizontal, dans lequel la dimension intérieure du compartiment de réception (20) dans une première direction spatiale horizontale (38) est supérieure à la dimension intérieure du compartiment de réception (20) dans une deuxième direction spatiale horizontale (40) transversale à la première direction spatiale (38), et dans lequel l'ouverture d'introduction (24) dans la première direction spatiale (38) est plus grande que dans la deuxième direction spatiale (40), **caractérisé en ce que** le bord (26) présente au moins une section évidée (48, 50) s'étendant transversalement à la deuxième direction spatiale (40) ainsi qu'au moins une section surélevée (44, 46) s'étendant transversalement à la première direction spatiale (38), dont la distance au dessous (14) du dispositif de réception (10) est supérieure à la distance de ladite au moins une section évidée (48, 50) par rapport au dessous (14), ladite au moins une section surélevée (44, 46) étant de forme convexe par rapport au dessous (14) du dispositif de réception (10), et ladite au moins une section évidée (48, 50) étant de forme concave par rapport au dessous (14) du dispositif de réception (10), et **en ce que** le bord (26) présente deux sections évidées (48, 50) et/ou deux sections surélevées (44, 46) respectivement disposées sur des côtés opposés de l'ouverture d'introduction (24).

2. Dispositif de réception selon la revendication 1, **caractérisé en ce que** la paroi (28) forme une surface de guidage (66) pour l'outil de lavage (58), par laquelle un couple orienté obliquement par rapport à un plan horizontal peut être exercé sur l'outil de lavage (58).

3. Dispositif de réception selon l'une des revendications précédentes, **caractérisé en ce que** le compartiment de réception (20) est formé en s'amincissant depuis le bord (26) vers le dessous (14) du dispositif de réception.

4. Dispositif de réception selon la revendication 3, **caractérisé en ce que** le compartiment de réception (20) est formé en s'amincissant plus dans la deuxième direction spatiale (40) que dans la première direction spatiale (38).

5. Dispositif de réception selon la revendication 3 ou 4, **caractérisé en ce que** le compartiment de réception (20) est formé en s'amincissant dans la direction d'une ligne de fuite (42) .

6. Dispositif de réception selon l'une des revendications 2 à 5, **caractérisé en ce que** la paroi (28) est prévue lisse.

7. Dispositif de réception selon l'une des revendications précédentes, **caractérisé en ce que** le compartiment de réception (20) présente une section transversale elliptique ou sensiblement elliptique avec un axe principal s'étendant dans la première direction spatiale (38) et un axe secondaire de l'ellipse générant la section transversale, s'étendant dans la deuxième direction spatiale (40) .

8. Dispositif de réception selon l'une des revendications précédentes, **caractérisé en ce que** le bord (26) forme un élément de guidage (70) pour la tige (56) du dispositif applicateur (22), par lequel un couple orienté obliquement par rapport à un plan horizontal peut être exercé sur la tige (56).

9. Dispositif de réception selon l'une des revendications précédentes, **caractérisé en ce que** le bord (26) est formé avec au moins un biseau (52, 54) dans la direction du compartiment de réception (20).

10. Dispositif de réception selon l'une des revendications précédentes, **caractérisé en ce que** ledit dispositif de réception (10) est prévu de manière symétrique par rapport à un plan de symétrie vertical, auquel la deuxième direction spatiale (40) est perpendiculaire.

11. Dispositif de réception selon l'une des revendications précédentes, **caractérisé en ce que** ledit dispositif de réception (10) comprend une paroi de fond (34) délimitant le compartiment de réception (20) sur le dessous, dans laquelle est ménagée une ouverture de sortie (36) pour le liquide de nettoyage.

12. Dispositif de réception selon l'une des revendications 1 à 10, **caractérisé en ce que** ledit dispositif de réception (10) comprend un canal d'évacuation (84) pour le liquide de nettoyage avec une ouverture d'entrée (86) ménagée dans la paroi (28), espacée d'une paroi de fond (34) délimitant de manière étanche le compartiment de réception (20) sur le dessous, et avec une ouverture de sortie (88) vers l'extérieur, située en dessous de l'ouverture d'entrée (86).
